# EUROPÄISCHE PATENTSCHRIFT

(11) **EP 1 011 187 B1**
(45) Veröffentlichungstag und Bekanntmachung des Hinweises auf die Patenterteilung: **14.02.2007**
(21) Anmeldenummer: 99124030.0
(22) Anmeldetag: 09.12.1999
(51) Int. Cl.: H02J 5/00, H01F 38/14

(54) **Vorrichtung zur berührungsfreien, induktiven Übertragung von Energie**
Device for non-contact, inductive transmission of energy
Dispositif pour la transmission sans contact et par induction de l'énergie

(30) Priorität: 10.12.1998 DE 19856937
(43) Veröffentlichungstag der Anmeldung: 21.06.2000
(73) Patentinhaber: Paul Vahle GmbH & Co. KG, D-59174 Kamen (DE)
(72) Erfinder: Meins, Jürgen, Prof. Dr.-Ing., 38126 Braunschweig (DE)
(74) Vertreter: Freiherr von Schorlemer, Reinfried

(56) Entgegenhaltungen:
- DE-C- 4 429 656
- DE-C- 19 735 624
- US-A- 5 293 308
- US-A- 5 528 113
- MANOCHEHR EGHTESADI: "INDUCTIVE POWER TRANSFER TO AN ELECTRIC VEHICLE-ANALYTICAL MODEL" VEHICULAR TECHNOLOGY CONFERENCE,US,NEW YORK, IEEE, Bd. CONF. 40, 1990, Seiten 100-104, XP000203792

## Beschreibung

Die Erfindung betrifft eine Vorrichtung der im Oberbegriff des Anspruchs 1 angegebenen Gattung, insbesondere zur berührungsfreien, induktiven Übertragung von Energie auf in Reihenschaltung betriebene, unterschiedliche Verbraucher, die mit einer konstanten Spannung gespeist werden sollen.

Zur berührungsfreien Übertragung elektrischer Energie können grundsätzlich elektrische oder magnetische Wechselfelder genutzt werden. Im Hinblick auf eine Umsetzung in eine technische Lösung ist dabei das ingesamt benötigte Bauvolumen, der gerätetechnische Aufwand, die übertragbare Leistung, die Abstrahlung der Felder in die Umgebung sowie das Verhalten im Fehlerfall von großer Bedeutung.

In dem U.S. Patent No. 514,972 (TESLA) wird eine Lösung zur berührungsfreien kapazitiven Energieübertragung beschrieben.

Das Induktionsgesetz kann für die Übertragung elektrischer Energie vorteilhaft genutzt werden, da mit zunehmender Frequenz des magnetischen Wechselfeldes das Bauvolumen der Komponenten abnimmt. Anordnungen, bei denen eine Primär-Energiequelle eine linear ausgedehnte Primär-Leiterschleife mit einem Wechselstrom speist und die Verbraucher sich entlang dieser Primär-Leiterschleife bewegen, sind vielfach beschrieben worden.

HUTIN und LeBLANC beschreiben im U.S. Patent No. 527,857 (1894) einen Vorschlag, in dem ein magnetisches Wechselfeld von 3 kHz zur Energieübertragung eingesetzt wird. OTTO beschreibt in dem NZ Patent No. 167,422 (1974) den Einsatz eines Primär-Serien-Resonanzkreises, der in dem Frequenzbereich zwischen 4 kHz und 10 KHz betrieben wird, um induktiv Energie auf z. B. Busse zu übertragen.

Bei allen Vorschlägen erfolgt die Energieübertragung dabei durch ein von der Primär-Leiterschleife erzeugtes magnetisches Wechselfeld auf wenigstens ein an einem Verbraucher angeordnetes Spulensystem, in das eine Spannung induziert wird. Beim Vorhandensein mehrerer Verbraucher handelt es sich dabei aus elektrischer Sicht um eine Reihenschaltung von mehreren, transformatorisch an eine Primärwicklung gekoppelten Verbrauchern. Der Leistungsfluß der Verbraucher ist dabei miteinander verkoppelt, so daß Maßnahmen zur Entkopplung getroffen werden müssen.

Es sind daher bereits zahlreiche Vorrichtungen der eingangs angegebenen Gattung bekannt geworden (z. B. DE 44 46 779 A1), um mit ihnen in Reihenschaltung betriebene Verbraucher mit unterschiedlicher Leistungsaufnahme, aber konstanter Speisespannung, zu entkoppeln.

In dem U.S. Patent No. 546,467,718 (21.11.1995) wird der Einsatz der induktiven, berührungsfreien Energieübertragung für ein Magnetschwebefahrzeug beschrieben. Zur Erhöhung der übertragbaren Energie wird vorgeschlagen, parallel zur Sekundärspule einen Kondensator anzuordnen, der sich unabhängig von dem Sekundär-Leistungsbedarf in Parallelresonanz mit der Sekundärspule befindet. Zur Regelung des Leistungsflusses wird zwischen der fahrzeugseitigen Sekundärspule und den fahrzeugseitigen Verbrauchern ein aus der einschlägigen Literatur bekannter, elektronischer, aktiver Schalter als Gleichstromsteller eingesetzt. Darüber hinaus wird beschrieben, die induktive Energieübertragung auch zur Erzeugung der Vortriebskraft für das Fahrzeug zu nutzen.

In dem U.S. Patent No. 5,528,113 (18.06.1996) wird der Einsatz von mehreren Sekundärspulen je Verbraucher zur berührungsfreien Energieübertragung beschrieben. Die einzelnen Sekundärspulen werden ebenfalls in Parallelresonanz mit einem Kondensator betrieben. Eine zwischen der fahrzeugseitigen Sekundärspule und den fahrzeugseitigen Verbrauchern angeordnete aktive Schalteinrichtung trifft einerseits die Auswahl derjenigen Sekundärspule, die die jeweils günstigste magnetische Kopplung zur Primärleiteranordnung aufweist, und wird andererseits auch zur Regelung des Leistungsflusses sowie zur Bereitstellung einer Spannung mit konstanter Amplitude genutzt.

In der Anmeldung PCT WO 93/23908 (25.11.1993) werden Anordnungen beschrieben, um für die Primärschleife und bei lastabhängigem primärseitigem Leistungsfluß den Betrieb der Primär-Leiterschleife in Resonanz zu gewährleisten. Als Lösungen werden primärseitig schaltbare Zusatzkondensatoren bzw. variable Zusatzinduktivitäten vorgeschlagen.

In dem U.S. Patent No. 5,293,308 (08.03.1994) wird vorgeschlagen, den Leistungsfluß entweder durch räumliches Entfernen der Sekundärspule vom Primärleiter oder aber durch eine schaltbare Sekundär-Zusatzwicklung zu regeln. Weitere Merkmale dieser Patentschrift sind der Betrieb eines aktiven Schalters als Serienschalter zwischen Sekundärspule und Sekundärverbraucher, als Parallelschalter zu Sekundärspule und Sekundärverbraucher oder als Schalter, um mit Zusatz Parallel-Kondensatoren die als Parallelschwingkreis ausgebildete Sekundäranordnung in Abhängigkeit vom Leistungsfluß zu verstimmen. Andere Merkmale dieser Patentschrift beziehen sich auf die lokale Erhöhung der übertragbaren Leistung durch lokale Primär-Zusatzleiter sowie auf unterschiedliche Anordnungen der Primär-Serien-Kondensatoren.

In der Anmeldung PCT WO 93/23909 (23.11.1993) wird die Unterteilung der Primär-Leiterschleife in Module, die über ein Zero-Inductance-Kabel miteinander verbunden sind, beschrieben.

In dem U.S. Patent No. 5,341,280 (23.08.1993) wird die Ausführung der Primär-Leiterschleife und der Sekundärspule als entweder geschlossene oder teilweise geöffnete Koaxialanordnung beschrieben, um die gegenseitige magnetische Kopplung zu verbessern.

In dem U.S. Patent No. 4,914,539 (03.04.1990) wird eine weitere Ausführungsform eines aktiven elektronischen Sekundärkontrollers zur Entkopplung und zur Regelung des Leistungsflusses beschrieben.

In der Anmeldung PCT WO 9410003 (11.05.1994) werden mehrere, zueinander versetzte Primär- und Sekundär-Wicklungsanordnungen beschrieben. Durch diese Maßnahme soll erreicht werden, daß durch diese Wechselpolanordnung gegenüber den bislang beschriebenen gleichartigen Polanordnungen eine geringere räumliche Ausbreitung des Magnetfeldes auftritt, um die Wechselwirkungen mit der Umwelt zu reduzieren. In einem weiteren-Merkmal wird in dem ebenfalls vorgesehenen Sekundär-Parallel-Schwingkreis eine Unterteilung des Schwingkreiskondensators vorgeschlagen, um auch die Auswirkungen der Sekundär-Streuinduktivität zu kompensieren. In einem weiteren Merkmal wird die Nutzung eines aktiven Sekundär-Wechselrichters zur Regelung des Leistungsflusses und zur Entkopplung der Sekundärverbraucher untereinander dargestellt.

In PCT WO 9425304 ist eine Anordnung gemäß Oberbegriff von Anspruch 1 zur berührungsfreien Übertragung von Energie beschrieben, bei der auf der Sekundärseite ein Schwingkreis-Kondensator in Reihenschaltung vorgesehen ist. Der Sekundär-Reihenkondensator soll dabei dazu dienen, die Übertragungsleistung zu erhöhen (Faktor 2 gegenüber einer Anordnung ohne Kondensator). Die Anpassung der von der Sekundärandordnung gelieferten Spannung an die Last erfolgt durch einen aktiven DC/DC-Wandler. In einer ersten Umwandlung wird der Skundär-Wechselstrom in einen Gleichstrom umgewandelt, und in einer zweiten Umwandlung wird der Gleichstrom in eine Gleichspannung oder aber in einen einstellbaren Gleichstrom umgewandelt. Außerdem ermöglicht diese Anordnung eine Spurführung eines Fahrzeuges längs einer Primär-Leiterschleife.

In EP 253345 wird eine weitere Anordnung zur induktiven Übertragung von Leistung mit dem Merkmal einer konstanten Ausgangsspannung beschrieben. Eine konstante (vom Belastungszustand unabhängige) Ausgangsspannung wird hierbei durch Ausnutzung des Sättigungszustandes des Ferritmaterials der Sekundär-Aufnehmerspule erreicht. Mit zunehmender Spannung erfolgt eine Verschiebung des magnetischen Arbeitspunktes mit der Wirkung einer Spannungsbegrenzung.

Schließlich ist in DE 44 29 656 die Unterteilung der Primärleiterschleife in mehrere, in sich kompensierte, schaltbare Sektionen beschrieben. Wesentlich hierbei ist, daß die nicht aktiven (stromlosen und magnetfeldfreien) Schaltabschnitte als Zuleitung für die aktiven Schaltabschnitte dienen, eine gesonderte elektrische Zuleitung an die einzelnen Schaltabschnitte daher nicht erforderlich ist. Zudem ist diese Anordnung dadurch vorteilhaft, daß die Induktivität der Zuleitung (nicht aktiver Abschnitt) dadurch niedrig ist, daß sich in einem Primärstrang zwei Leiter befinden, welche zu einander entgegengesetzten elektrischen Strömen führen. Hierdurch wird der Blindleistungsbedarf der Primäranordnung niedrig gehalten.

Die vorangehend beschriebenen Anordnungen benötigen, sofern sie als Sekundär-Parallelresonanzkreis ausgebildet sind, aktive elektronische Regel-Einrichtungen, um die Entkopplung mehrerer voneinander unabhängiger Verbraucher mit unterschiedlichem Leistungsbedarf zu ermöglichen bzw. um die Ausgangsspannung zu stabilisieren. Nachteilig hierbei ist, daß bei Ausfall der aktiven elektronischen Regel-Einrrichtung kein Schutz des Sekundärverbrauchers vor Überspannungen vorhanden ist.

Die Nutzung der magnetischen Sättigung eines Ferrit-Werkstoffes (Magnetisierungskennlinie) ist ebenfalls nachteilig, da sie im allgemeinen relativ ungenau ist und mit im Ferrit-Werkstoff auftretenden Verlusten verbunden ist.

Der Erfindung liegt daher das Problem zugrunde, diese Nachteile zu vermeiden und die Vorrichtung der eingangs bezeichneten Gattung so auszubilden, daß außer einer Speisung der Verbraucher mit konstanter Spannung ohne einen Regler auch eine Spurführung von mit der Vorrichtung versehenen Fahrzugen längs der Leiterschleife möglich ist. Außerdem soll erreicht werden, daß zum Beispiel auch bei Leerlauf eines Verbrauchers die an ihm anliegende Spannung nicht auf einen hohen Wert ansteigt, der zu einer Zerstörung führen kann, und daß für weitere, in Reihenschaltung betriebene Verbraucher keine Blockung des Leistungsflusses vorhanden ist.

Zur Lösung dieser Aufgabe dienen die kennzeichnenden Merkmale des Anspruchs 1.

Durch die Erfindung wird der Vorteil erzielt, daß die Verbraucher ohne aktive Schaltelemente jeweils mit einer von ihrer Leistung unabhängigen konstanten Spannung gespeist werden. Auch für den Leerlauf eines Verbrauchers bleibt die Speisespannung konstant, um den Schutz gegen Überspannungen zu gewährleisten. Darüber hinaus wird bei Leerlauf eines Verbrauchers der Leistungfluß zu weiteren, in Reihenschaltung betriebenen Verbrauchern nicht blockiert. Diese an die Schaltungsanordnung gestellten Funktionsanforderungen werden nicht durch aktive Schaltelemente mit den zugehörigen aktiven Regelungseinrichtungen erfüllt, sondern allein durch eine passive Anordnung, die aufgrund des nachfolgend beschriebenen physikalischen Wirkungsprinzips die gestellten Aufgaben erfüllt.

Zur Realisierung der erfindungsgemäßen Mittel zur Ermittlung der seitlichen Lageabweichung besteht das Sekundär-Wicklungssystem vorzugsweise aus mindestens zwei Spulen, die nur teilweise magnetisch gekoppelt sind und deren Spulenachsen einen anderen Abstand zueinander aufweisen als der Mittenabstand der parallelen Einzelleiter der Primär-Leiterschleife. Die Differenz der Sekundär-Spulenspannungen liefert ein der seitlichen Lageabweichung des Sekundär-Wicklungssystems von der Primärleiterschleife proportionales Signal. Dadurch wird die seitliche räumliche Lageabweichung der Verbraucher gegenüber einer in Bewegungsrichtung der Verbraucher ausgedehnten, ortsfesten Induktionsschleife in einem elektrischen Signal abgebildet, d. h. in Kombination mit der Energieübertragung wird ein Signal für die Spurführung eines jeden Verbrauchers entlang der ortsfesten Primär-Leiterschleife geliefert.

Weitere vorteilhafte Merkmale der Erfindung ergeben sich aus den Unteransprüchen.

Handelt es sich bei den Verbrauchern um Fahrzeuge, dann besteht die erfindungsgemäße Vorrichtung z. B. aus einer einen eingeprägten Wechselstrom führenden, elektrischen Primär-Leiterschleife, die in Bewegungsrichtung der Verbraucher ortsfest verlegt ist, aus je einem den Verbrauchern zugeordneten Sekundär-Wicklungssystem, das in Reihenschaltung induktiv mit dem Primärleiter gekoppelt ist, und aus einem dem Sekundär-Wicklungssystem nachgeschalteten Kondensator. Das Sekundär-Wicklungssystem, der Kondensator sowie der elektrische Verbraucher sind in Reihenschaltung so angeordnet, daß die einzelnen Verbraucher unabhängig von der individuell unterschiedlichen Leistungsaufnahme mit einer jeweils in der Amplitude konstanten Spannung gespeist werden. Insgesamt bildet die je Verbraucher vorgesehene Anordnung einen passiven Vierpol, in dem ein eingeprägter eingangsseitiger Wechselstrom in eine konstante Ausgangsspannung transformiert wird.

Durch die selbsttätige Leistungsanpasssung wird erreicht, daß auch im Leerlauf die am Verbraucher anliegende Spannung konstant bleibt und somit ein sich im Leerlauf befindlicher Verbraucher keine Blockierung des Leistungsflusses für die weiteren, in Reihenschaltung betriebenen Verbraucher bildet. Die Schaltungsanordnung arbeitet auch im Leerlauf einzelner Verbraucher mit hohem Wirkungsgrad. Die Speisung der Primär-Leiterschleife mit einem eingeprägten hochfrequenten Wechselstrom kann durch handelsübliche Wechselrichter erfolgen.

In einer modifizierten Form kann die berührungsfreie Energieübertragung auch losgelöst von der Spurführung in einer Ebene eingesetzt werden.

Im folgenden wird die Erfindung mit Hilfe von Zeichnungen genauer erläutert. Es zeigen:
Fig. 1 eine erfindungsgemäße Vorrichtung zur berühungsfreien Übertragung von elektrischer Energie an mehrere, in Reihenschaltung betriebene, unterschiedliche Verbraucher;
Fig. 2a das vereinfachte elektrische Ersatzschaltbild eines Verbrauchers der erfindungsgemäßen Vorrichtung;
Fig. 2b das auf die Primärseite umgerechnete, vereinfachte elektrische Ersatzschaltbild eines Verbrauchers der erfindungsgemäßen Vorrichtung;
Fig. 2c das Zeigerdiagramm der Spannungen und Ströme in einem Lastzustand;
Fig. 3a schematisch den Verlauf der Magnetfeldlinien im Leerlauf eines fahrzeugseitigen Verbrauchers und bei mittiger Spurführung;
Fig. 3b schematisch den Verlauf der Magnetfeldlinien bei Last des fahrzeugseitigen Verbrauchers nach Fig. 3a und bei mittiger Spurführung;
Fig. 3c schematisch den Verlauf der Magnetfeldlinien im Leerlauf des fahrzeugseitigen Verbrauchers nach Fig. 3a und bei seitlich ausgelenkter Spurführung;
Fig. 4a eine Ausführung des Sekundär-Wicklungssystems mit vier Wicklungen;
Fig. 4b die elektrische Verschaltung des Sekundär-Wicklungs-Systems mit vier Wicklungen nach Fig. 4a;
Fig. 5a die Anordnung eines Primär-Leitersystems mit nebeneinander angeordneten Primärleitern;
Fig. 5b eine elektrische Schaltungsanordnung eines Sekundär-Wicklungssystems für die Anordnung nach Fig. 5a;
Fig. 5c eine Variante der Anordnung nach Fig. 5a; und
Fig. 6 eine Unterteilung der Primärleiterschleife in schaltbare Segmente.

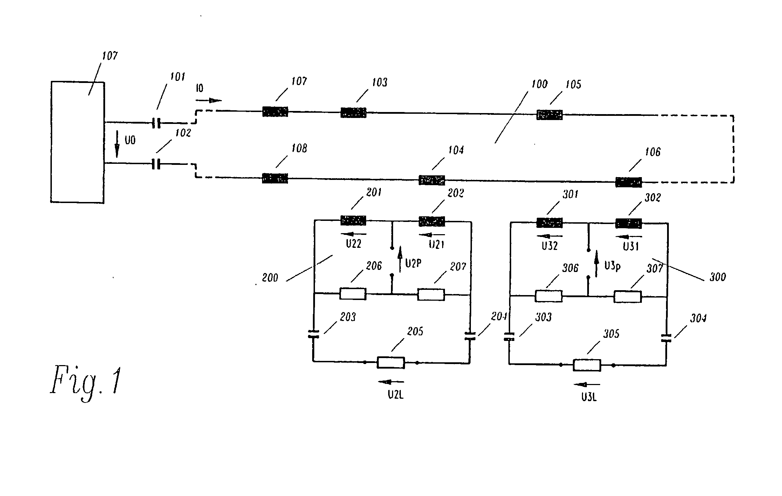

Fig. 1 zeigt eine erfindungsgemäße Vorrichtung zur berührungsfreien induktiven Übertragung von Energie auf Verbraucher, die auf Fahrzeugen 200 und 300 angeordnet sind. Eine in Fahrtrichtung der Fahrzeuge 200 und 300 und ggf. weiterer Fahrzeuge ausgedehnte Primär-Leiterschleife 100 wird von einem Primär-Wechselrichter 107 mit einem eingeprägten Wechselstrom I0 gespeist. In Reihenschaltung angeordnete Kondensatoren 101 und 102 kompensieren die Gesamtreaktanz der Primär-Leiterschleife 100, die im wesentlichen aus Streureaktanzen 107, 108 der gesamten Primär-Leiterschleife 100 sowie zu einem geringen Teil aus Koppelreaktanzen 103, 104 zu den verbraucherseitigen Sekundärspulen für das Fahrzeug 200 und aus Koppelreaktanzen 105, 106 zu verbraucherseitigen Sekundärspulen für das Fahrzeug 300 sowie aus ggf. weiteren Koppelreaktanzen zu weiteren Fahrzeugen besteht. Jedem Fahrzeug 200, 300 ist ein Sekundär-Wicklungs- bzw. Spulensystem zugeordnet, das aus mindestens zwei Einzelspulen besteht. Für das Fahrzeug 200 mit einem Verbraucher 205 sind dies Spulen 201 und 202. Für das Fahrzeug 300 mit einem Verbraucher 305 sind dies Spulen 301 und 302.

Durch das vom stromdurchflossenen Primärleiter 100 erzeugte magnetische Wechselfeld wird in den fahrzeugseitigen Spulen jeweils eine Wechselspannung induziert. Für das Fahrzeug 200 ist hierbei die Fahrzeugwicklung 201 magnetisch mit der oberen Primärwicklung 104 gekoppelt. Der elektrische Verbraucher 205 des Fahrzeugs 200 ist über die in Reihenschaltung angeordneten Kondensatoren 203 und 204 mit den ebenfalls in Reihenschaltung angeordneten Sekundär-Wicklungen 201 und 202 verbunden. Die Kondensatoren 203, 204 sind so bemessen, daß ihr Blindwiderstand dem der Sekundär-Wicklungen 201, 202 entspricht. Durch diese Schaltungsanordnung wird der Verbraucher 205 unabhängig von seinem Lastzustand und auch unabhängig von dem Lastzustand der anderen in Reihenschaltung angeordneten Verbraucher mit der konstanten Spannung U2L gespeist. Andererseits bewirkt diese Schaltungsanordnung auch, daß der Leistungsfluß zu den einzelnen Sekundärverbrauchern nicht unterbrochen wird, wenn sich einer oder mehrere der Sekundärverbraucher im Leerlauf befinden und dabei von ihnen keine Leistung aufgenommen wird. Dabei ist das Sekundär-Wicklungssystem mit einer ausschließlich aus passiven Schaltelementen gebildeten Schaltungsanordnung (203, 204) verbunden. Diese passive Schaltungsanordnung beinhaltet auch eine Schutzfunktion derart, daß auch bei Leerlauf des Verbrauchers 205 seine Speisespannung konstant bleibt und keine Überspannung auftritt.

Wie weiter unten näher erläutert wird, kann auf jedem Fahrzeug auch ein der Spurführung dienendes Signal gebildet werden. Hierzu bilden z. B. auf dem Fahrzeug 200 hochohmige Widerstände 206 und 207 zusammen mit den Sekundär-Wicklungen 201 und 202 eine Brückenschaltung, an deren Brückendiagonale eine Spannung U2P als Differenz der Spannungen U21, U22 das Spurführsignal bildet. Wird z. B. der räumliche Leiterabstand von Hin- und Rückleiter der Primärleiterschleife 100 unterschiedlich zu den magnetischen Achsen der Sekundär-Wicklungen gewählt, so werden bei seitlicher Auslenkung der Sekundär-Wicklungen gegenüber der Primär-Leiteranordnung in den Sekundär-Wicklungen Wechselspannungen mit zur Auslenkung proportional unterschiedlichen Amplituden induziert. Für das Fahrzeug 200 zeigt dann die Brückenspannung U2P eine mit der Auslenkung zunehmende Amplitude, wobei das Vorzeichen von der Auslenkungsrichtung bestimmt wird. Entsprechendes gilt für das Fahrzeug 300 (306, 307, U3P).

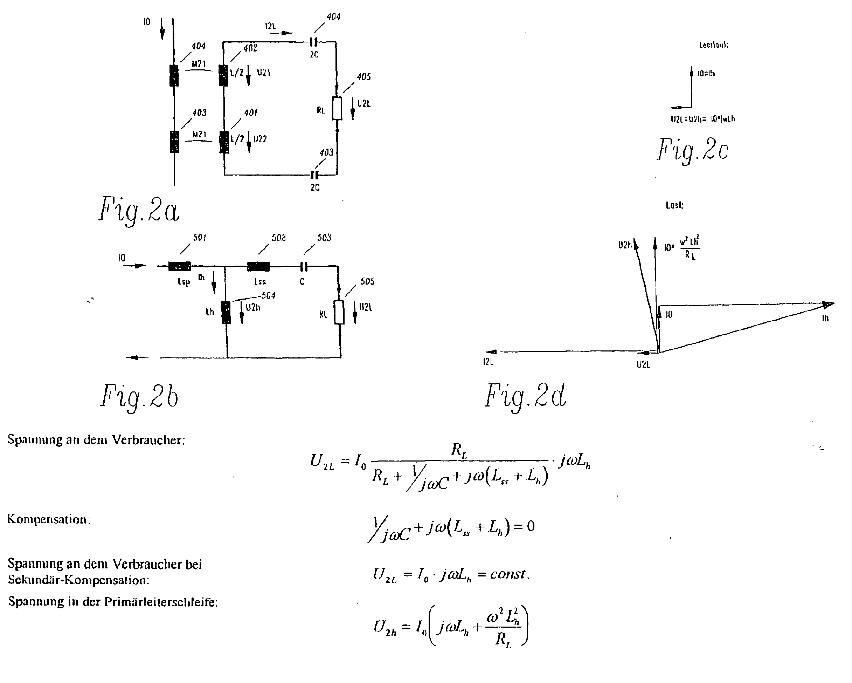

Fig. 2a zeigt das elektrische Ersatzschaltbild einer verbraucherseitigen Sekundär-Anordnung. Es ist ein Ausschnitt der mit einem eingeprägten Wechselstrom gespeisten Primär-Leiterschleife sowie eine verbraucherseitige Sekundär-Anordnung dargestellt. Im einzelnen sind dargestellt Induktivitäten 401 und 402 der zwei Sekundär-Wicklungen eines Fahrzeuges, die mit der Primär-Leiterschleife magnetische Kopplungen 403 und 404 aufweisen. Die Sekundär-Wicklungen 401 und 402 bilden zusammen mit Kondensatoren 403 und 404 sowie einer Last 405 eine Reihenschaltung.

In Fig. 2b ist die Schaltung entsprechend Fig. 2a dahingehend vereinfacht, daß die Sekundär-Wicklungen zusammengefaßt und auf die Primärseite umgerechnet wurden. Die induktive Kopplung ist in der Hauptinduktivität Lh 504, die magnetische Streuung auf der Primärseite in der Streuinduktivität Lsp 501 und die magnetische Streuung auf der Sekundärseite in der Streuinduktivität Lss 502 berücksichtigt. Die in Reihenschaltung betriebenenen Kondensatoren sind ebenfalls zu dem Sekundärkondensator C 503 zusammengefaßt. Wird der Kondensator so bemessen, daß sein Blindwiderstand dem aus der Reihenschaltung der Sekundär-Streuinduktivität 502 und der Haputinduktivität 504 gebildeten Blindwiderstand entspricht, so ergibt sich an dem Verbraucher eine unabhängig von dem Lastzustand in der Amplitude konstante Spannung U_{SL} = Iₒ·jwLₕ. Auch der Leerlauf ist in diese Betrachung mit eingeschlossen.

Wie in Fig. 2c dargestellt ist, entspricht die in der Primär-Leiterschleife wirksame Spannung U2h für den Leerlauf der an dem Verbraucher anliegenden Spannung U2L und weist gegenüber dem Primärstrom IO eine Phasenvoreilung von 90° auf. Erhöht sich die in dem Verbrauch umgesetzte Leistung, so erhöht sich entsprechend der übertragenen Wirkleistung die in der Primär-Leiterschleife wirksame Spannung um einen in Phase mit dem eingeprägten Primärstrom IO liegenden Term.

Dieser Zusammenhang ist in Fig. 2d dargestellt und läßt erkennen, daß im Leerlauf des Verbrauchers lediglich eine geringe Blindleistung von der primärseitigen Energieeinspeisung zur Verfügung gestellt werden muß. Mit zunehmender Übertragungswirkleistung erfolgt eine selbsttätige Anpassung des Leistungsflusses durch einen zunehmenden Wirkanteil der primärseitig einzuspeisenden Spannung. Zugleich liefert der Laststrom IL den für die Magnetisierung des Luftspaltes zwischen Primärleiterschleife und Sekundär-Wicklungen zusätzlich erforderlichen Blindleistungsanteil. Da in dieser beschriebenen Anordnung keine aktiven Schaltelemente erforderlich sind, ist eine Zerstörung des Lastkreises durch eine unzulässig hohe Spannung ausgeschlossen. Zugleich führt diese Schaltungsanordnung dazu, daß die primärseitige Energiequelle lediglich eine dem sekundärseitigen Leistungsbedarf entsprechende Wirkleistung bereitzustellen hat.

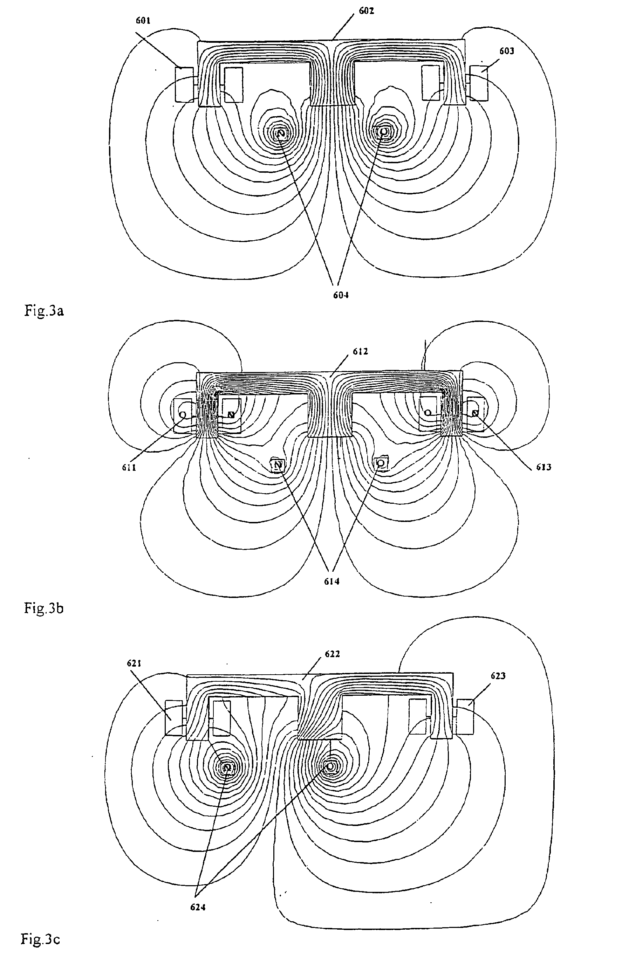

Fig. 3a, Fig. 3b und Fig. 3c zeigen Darstellungen, in denen sich die fahrzeugseitigen Sekundär-Wicklungen, die sich auf einem Ferritkern befinden, aus der Zeichenebene heraus bewegen, sowie die beiden Leiter der Primär-Leiterschleife, die sich gleichfalls aus der Zeichenebene heraus ausdehnen.

In Fig. 3a ist der Leerlaufzustand der Anordnung dargestellt. Sekundär-Wicklungen 601 und 603 führen keinen Strom. Zur Erhöhung der magnetischen Kopplung zwischen einer Primär-Leiterschleife 604 und den Sekundär-Wicklungen 601 und 603 sind diese auf einem Ferritkern 602 angeordnet. Der Abstand der Primärleiter 604 weicht von dem Nutmittenabstand des Ferritkernes 602 ab. Bei mittiger Stellung des Sekundärsystemes gegenüber dem Primärsystem würden in den beiden Sekundär-Wicklungen 601 und 603 Spannungen mit gleicher Amplitude induziert, so daß sich deren Differenz zu Null ergibt. Der Verlauf des Magnetfeldes wird von der von einem eingeprägten Wechselstrom durchflossenen Primär-Leiterschleife 604 generiert.

In Fig. 3b ist ein Belastungszustand der Anordnung durch den Sekundärverbraucher dargestellt. Sekundär-Wicklungen 611 und 613 führen den Laststrom. Zur Erhöhung der magnetischen Kopplung zwischen einer Primär-Leiterschleife 614 und den Sekundär-Wicklungen 611 und 613 sind diese, wie auch in Fig. 3a dargestellt ist, auf einem Ferritkern 612 angeordnet. Der Abstand der Primärleiter 614 weicht von dem Nutmittenabstand des Ferritkernes 612 ab. Bei mittiger Stellung des Sekundärsystemes gegenüber dem Primärsystem würden in den beiden Sekundär-Wicklungen 611 und 613 Spannungen mit gleicher Amplitude induziert, so daß sich deren Differenz zu Null ergibt. Der Verlauf des Magnetfeldes wird von der von einem Wechselstrom durchflossenen Primär-Leiterschleife 614 und dem in den Sekundär-Wicklungen 611 und 613 fließenden Laststrom generiert.

In Fig. 3c ist der Leerlaufzustand der Anordnung durch den Sekundärverbraucher bei seitlicher Auslenkung eines Sekundär-Systems 621, 622, 623 gegenüber einem PrimärSystem 624 dargestellt. Die Sekundär-Wicklungen 621 und 623 führen den Laststrom. Zur Erhöhung der magnetischen Kopplung zwischen der Primär-Leiterschleife 624 und den Sekundär-Wicklungen 621 und 623 sind diese, wie auch in Fig. 3a und Fig. 3b dargestellt ist, auf einem Ferritkern 622 angeordnet. Der Abstand der Primärleiter 624 weicht von dem Nutmittenabstand des Ferritkernes 622 ab. Bei seitlich ausgelenkter Stellung des Sekundärsystemes gegenüber dem Primärsystem werden in den beiden Sekundär-Wicklungen 621 und 623 Spannungen mit unterschiedlicher Amplitude induziert, so daß deren Differenz einen zur seitlichen Auslenkung proportionalen Wert ergibt. Der Verlauf des Magnetfeldes wird von der von einem Wechselstrom durchflossenen Primär-Leiterschleife 624 generiert. Dadurch wird ein Mittel zur Ermittlung bzw. Erkennung der seitlichen Lageabweichung des Sekundär-Wicklungssystems von der Primär-Leiterschleife geschaffen.

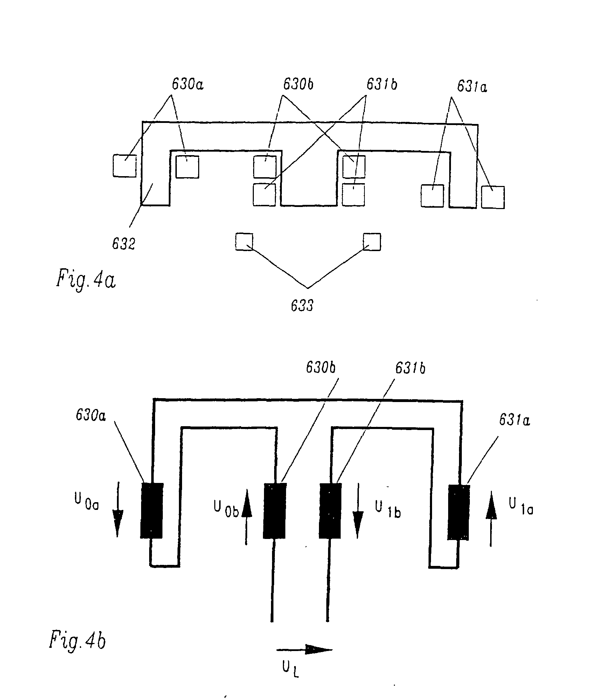

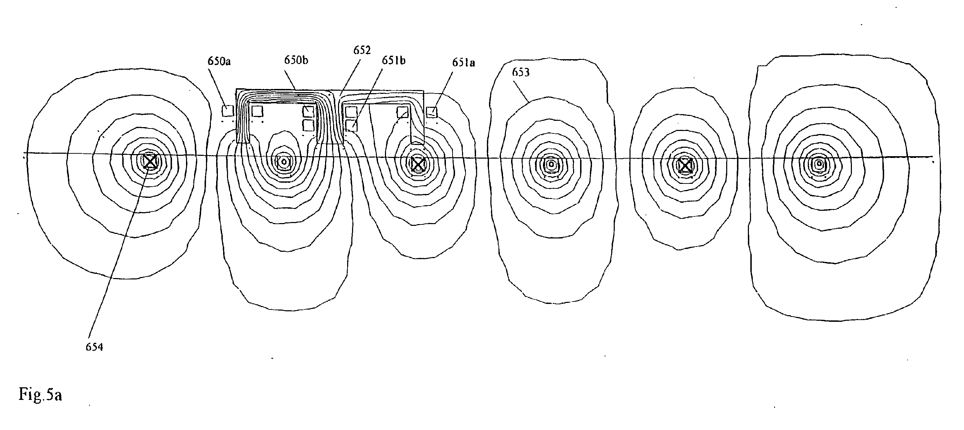

In Fig. 4a ist ein Sekundär-Wicklungsystem dargestellt, das aus insgesamt vier Wicklungen 630a, 630b, 631a, 631b besteht. Auf den Außenschenkeln eines Ferritkernes 632 befinden sich die Wicklungen 630a, 631a. Die von einem Primärleiter-System 633 in diese Wicklungen 630a, 631a induzierten Spannungen werden sowohl für die Bestimmung des Auslenksignals als auch zur Energieübertragung genutzt. Auf dem Mittelschenkel des Ferritkernes 632 sind zwei weitere Wicklungen 630b, 631b angeordnet, deren induzierte Spannungen ausschließlich für die Energieübertragung genutzt werden, da sie keine Information über die seitliche Auslenkung enthalten.

Fig. 4b zeigt, daß alle Wicklungen elektrisch in Reihenschaltung miteinander verbunden sind. Die Wicklungen 630a und 631a sind auf den Außenschenkeln des Ferritkernes 632 angeordnet. Die Differenz der in den Wicklungen 630a und 631a von dem Primär-Leiter-System 633 induzierten Spannungen U0a-U1a liefert ein zur seitlichen Auslenkung des Sekundär-Wicklungs-Systems gegenüber dem Primär-Leiter-System proportionales Lagesignal, während die Summe UL aller induzierten Spannungen zur Energieübertragung genutzt wird.

Diese Anordnung wird gegenüber der in den Fig. 3a, Fig. 3b und Fig. 3c dargestellten Ausführungen bevorzugt, da der zur Verfügung stehende Wickelraum besser genutzt werden kann.

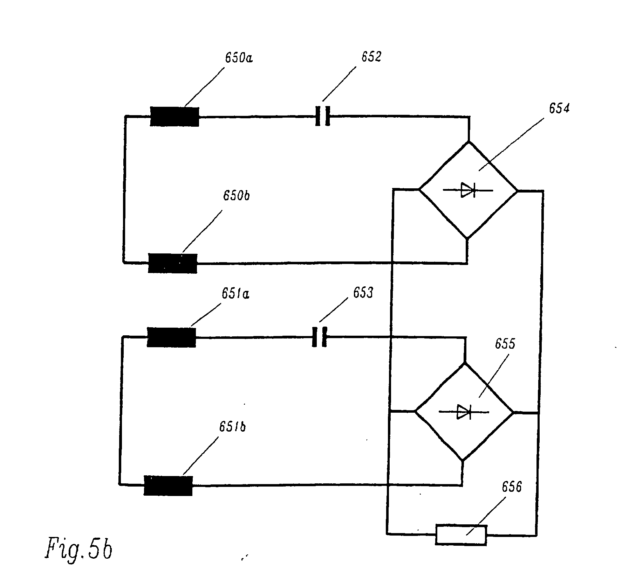

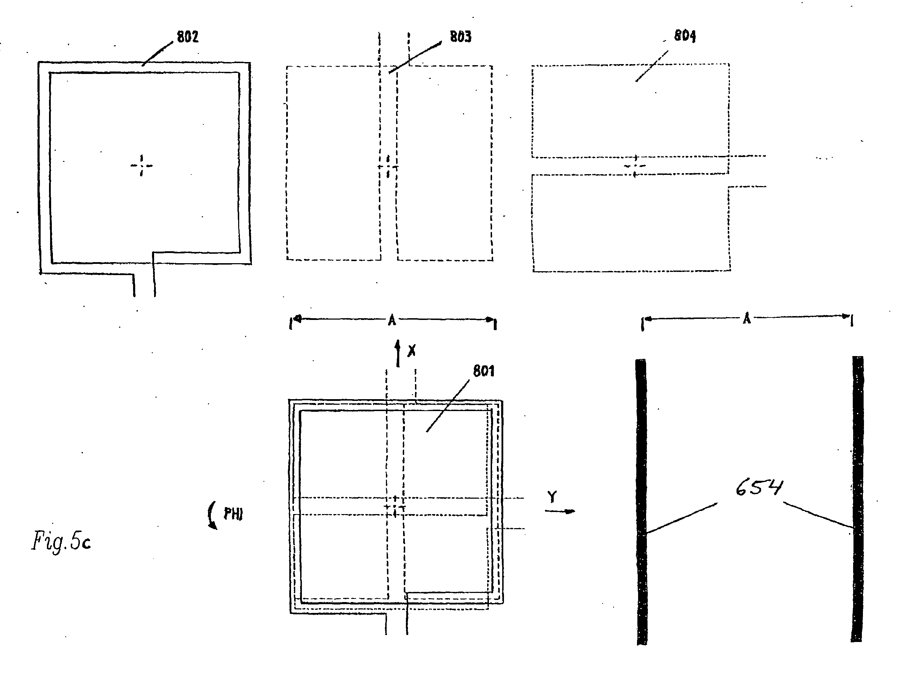

In Fig. 5a ist eine Primärleiteranordnung 654 dargestellt, die in Verbindung mit einem ebenfalls dargestellten modifizierten Sekundärleiter-System geeignet ist, Energie auf das Sekundärsystem auch bei einer Bewegung des Sekundärsystems quer zur Ausdehnung der Primärleiter zu übertragen. Damit ist eine Energieübertragung auch bei zweidimensionaler Bewegung des Sekundär-Systems in der Ebene des Primär-Systems möglich. Erreicht wird dies dadurch, daß mehrere Primärleiter 654 nebeneinander angeordnet sind und jeweils nebeneinander liegende Primärleiter einen eingeprägten Wechselstrom in unterschiedlicher Richtung führen. Quer zur Ausdehnung der Primär-Leiter ergibt sich damit ein magnetisches Wechselfeld 653 in aufeinanderfolgend unterschiedlicher Feldrichtung. Damit in jeder beliebigen Position des Sekundärwicklungssytems auf dieses Energie übertragen werden kann, besteht das Sekundär-Wicklungsystem aus Wicklungen 650a und 650b, die eine Wicklungsgruppe bilden, sowie aus Wicklungen 651a und 651b, die eine weitere Wicklungsgruppe bilden. der Abstand beider Wicklungsgruppen entspricht dem halben Primärleiterabstand, so daß in jeder beliebigen Position des Sekundärsystems mindestens eine der beiden Wicklungsgruppen Energie an den Verbraucher speisen kann.

In Fig. 5b ist die elektrische Schaltungsanordnung des Sekundär-Systems entsprechend Fig. 5a dargestellt. Die Wicklungsgruppe 650a und 650b speist in Serienschaltung mit einem Kondensator 652 und einem Gleichrichter 654 auf einen gemeinsamen Verbraucher 656. Die Wicklungsgruppe 651a und 651b speist in Serienschaltung mit einem Konsensator 653 und einem Gleichrichter 654 auf einen gemeinsamen Verbraucher 656. Durch die Gleichrichter 654 und 655 wird selbsttätig die von der Position des Sekundärssystems abhängige, bezüglich der Energieeinkopplung jeweils günstigste Wicklungsgruppe genutzt.

Fig. 5c zeigt eine Vorrichtung, bei der ein Sekundär-Wicklungssystem 801 ebenfalls so eingerichtet ist, daß es bei beliebiger Verschiebung in X - oder Y - Richtung sowie bei beliebiger Drehung um einen Winkel PHI induktiv mit der Primär-Leiteranordnung 654 nach Fig. 5a gekoppelt ist. Daher kann das Sekundär-Wicklungssystem 801 bei beliebiger Positionierung relativ zu der Primär-Leiteranordnung 654 elektrische Leistung bereitstellen. Hierzu besteht das Wicklungssystsem 801 z. B. aus drei übereinander liegenden Einzelspulen 802, 803 und 804, wobei eine der Spulen eine runde oder eckige Spule 802 ist und eine Weite hat, die dem Abstand A der Primärleiter 654 entspricht. Eine zweite Spule 803 weist die Form einer 8 auf und hat eine Weite, die dem halben Abstand der Primärleiter 654 entspricht. Eine dritte Spule 804, die ebenfalls die Form einer 8 aufweist und wie die Spule 803 ausgebildet ist, ist gegenüber der Spule 803 jedoch räumlich um 90° gedreht. Die drei Spulen 802, 803 und 804 sind übereinander angeordnet, so daß mindestens eine der drei Spulen bei beliebiger Verschiebung in X oder Y-Richtung und/oder aber bei beliebiger Drehung um den Winkel PHI mit der Primär-Leiteranordnung 654 entsprechend Fig. 5a,b induktiv gekoppelt ist und damit bei beliebiger Position gegenüber der Primär-Leiteranordnung 654 elektrische Leistung bereitstellt.

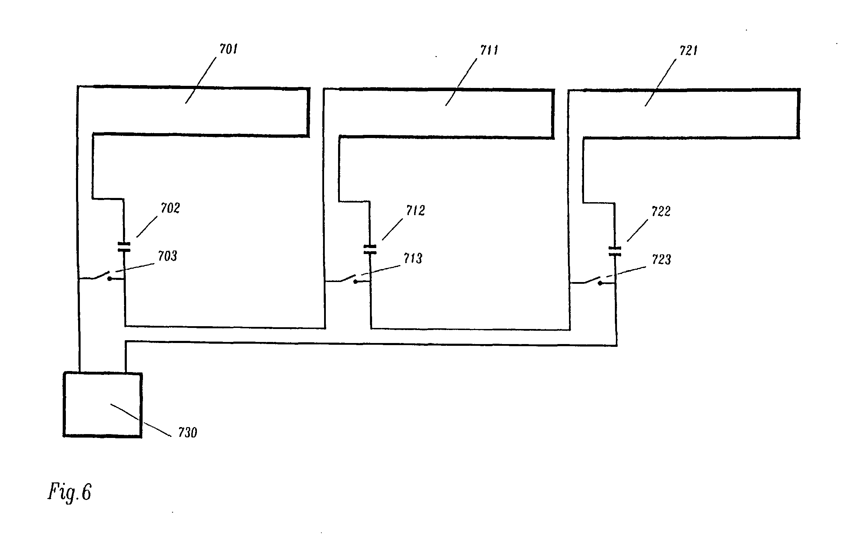

Fig. 6 zeigt eine Unterteilung der gesamten Primär-Leiterschleife in mehrere schaltbare Segmente 701, 711, 721. Ein Kurzschluß einzelner Segmente durch jeweils parallel zu den Segmenten angeordnete Schalter 703, 713, 723 unterbricht die Stromspeisung für das betroffene Segment, so daß eine einfache Blocksteuerung über die Energiezufuhr an die Verbraucher möglich ist. Zur Kompensation der primärseitigen Blindleistung ist jedem Segment ein Reihenkondensator 702, 712, 722 zugeordnet.

Die Erfindung ist nicht auf die beschriebenen Ausführungsbeispiele beschränkt, die in vielfacher Weise abgewandelt und deren Merkmale in anderen als den dargestellten und beschriebenen Kombinationen angewendet werden können. Außerdem können die Verbraucher unbeweglich entlang der Primär-Leiterschleife angeordnet sein.

## Patentansprüche

1. Vorrichtung zur berührungsfreien induktiven Übertragung von Energie auf wenigstens einen elektrischen, mit konstanter Spannung betriebenen Verbraucher (205), mit einer einen eingeprägten Wechselstrom führenden elektrischen Primär-Leiterschleife (100), einem dem Verbraucher (205) zugeordneten, induktiv mit der Primär-Leiterschleife (100) gekoppelten Sekundär-Wicklungssystem (200) mit Sekundär-Wicklungen (201, 202, 301, 302) und einer ausschließlich aus passiven Bauelementen (203, 204 bzw. 303, 304) aufgebauten Schaltungsanordnung zur Speisung des Verbrauchers mit einer von seinem Lastzustand unabhängigen, im wesentlichen konstanten Spannung, wobei die Vorrichtung Mittel zur Spurführung des Verbrauchers aufweist, die die seitliche Lageabweichung des Sekundär-Wicklungssystems von der Primär-Leiterschleife ermitteln, **dadurch gekennzeichnet, daß** die Sekundär-Wicklungen (201, 202, 301, 302) als Mittel zur Ermittlung der seitlichen Lageabweichung eingerichtet sind.

2. Vorrichtung nach Anspruch 1, **dadurch gekennzeichnet, daß** die räumlichen Wicklungsachsen der Sekundärwicklungen (201, 202) derart vom räumlichen Leiterabstand der Primär-Leiterschleife (100) abweichen, daß die Differenz der elektrischen Spannungen (U22, U21) an den Sekundärwicklungen (201, 202) ein zur Ermittlung der seitlichen Lageabweichung des Sekundär-Wicklungssystems von der Primär-Leiterschleife (100) geeignetes Signal (U2P) liefert.

3. Vorrichtung nach Anspruch 1 oder 2, **dadurch gekennzeichnet, daß** das Sekundär-Wicklungssystem aus insgesamt vier voneinander unabhängigen Einzelwicklungen (630a, 630b, 631a, 631b) besteht, wobei zwei Wicklungen (630a, 631a) auf den Außenschenkeln und zwei Wicklungen (630b, 631b) auf einem gemeinsamen Mittelschenkel eines Ferritkerns (632) angeordnet sind, und wobei alle Wicklungen eine magnetische Kopplung zur Primär-Leiterschleife (633) aufweisen und elektrisch in Reihenschaltung miteinander verbunden sind.

4. Vorrichtung nach einem der Ansprüche 1 bis 3, **dadurch gekennzeichnet, daß** sie eine im wesentlichen in einer Ebene (X,Y) liegende Primär-Leiterordnung (654) und ein Sekundär-Wicklungssystem (801) aufweist, die beide so eingerichtet und/oder angeordnet sind, daß bei beliebiger Verschiebung des Sekundär-Wicklungssystems (801) in X-oder Y-Richtung und/oder bei beliebiger Drehung des Sekundärwicklungssystems um einen Winkel PHI relativ zur Primär-Leiterordnung (654) wenigstens eine Sekundärwicklung induktiv mit der Primär-Leiteranordnung (654) gekoppelt ist und daher das Sekundär-Wicklungssystem (801) bei beliebiger Positionierung relativ zur Primär-Leiteranordnung (654) elektrische Leistung bereitstellt.

5. Vorrichtung nach Anspruch 4, **dadurch gekennzeichnet, daß** eine Vielzahl von Primärleitern (654) quer zu ihrer Ausdehnung in einer Ebene in einem Abstand nebeneinander angeordnet sind und dabei jeweils zwei benachbarte Primärleiter einen Wechselstrom unterschiedlicher Stromrichtung führen, so daß sich quer zur Ausdehnung ein räumliches, magnetisches Wechselfeld (653) mit aufeinander folgend unterschiedlicher Feldrichtung ausbildet, und daß die räumlichen Wicklungsachsen der Sekundärwicklungen (650a, 650b bzw. 651a, 651b) in dem halben Abstand des räumlichen Leiterabstandes der Primärleiter angeordnet sind, wobei die Sekundärwicklungen zwei Wicklungsgruppen bilden, die in Reihenschaltung mit jeweils einem Kondensator (652, 653) und jeweils einem Gleichrichter (654, 655) einen gemeinsamen Verbraucher (656) speisen.

6. Vorrichtung nach Anspruch 40, **dadurch gekennzeichnet, daß** das sekundäre Wicklungssystem (801) aus drei übereinanderliegenden Einzelspulen (802, 803, 804) besteht, wobei eine der Spulen 803 eine runde oder rechteckige Spule mit einer Weite (A) ist, die dem Abstand (A) der Primär-Leiteranordnung entspricht, eine zweite Spule (803) die Form einer 8 aufweist eine Weite hat, die dem halben Abstand der Primär-Leiteranordnung (654) entspricht, und eine dritte Spule (804), die ebenfalls die Form einer 8 aufweist und der Spule (803) entspricht, gegenüber der Spule (803) räumlich um 90° gedreht ist, und wobei die drei Spulen (802, 803, 804) so übereinander angeordnet sind, daß mindestens eine der drei Spulen bei beliebiger Verschiebung in X- oder Y-Richtung und/oder aber bei beliebiger Drehung um einen Winkel PHI mit der Primär-Leiteranordnung (654) induktiv gekoppelt ist und damit das Sekundär-Wicklungssystem (801) bei beliebiger Positionierung gegenüber der Primär-Leiteranordnung (654) elektrische Leistung bereitstellt.

7. Vorrichtung nach einem der Ansprüche 1 bis 6, **dadurch gekennzeichnet, daß** mehrere Sekundär-Reihenschaltungs-Anordnungen jeweils über einen ihnen in Reihenschaltung zugeordneten Gleichrichter einen gemeinsamen Verbraucher speisen.

8. Vorrichtung nach einem der Ansprüche 1 bis 7, **dadurch gekennzeichnet, daß** die Primär-Leiterschleife in Blockabschnitte unterteilt ist und Schalter (703, 713, 723) enthält, die einzele Segmente (701, 711, 721) durch Überbrückung der Einspeisepunkte stromlos schalten können, wobei die einzelnen Segmente (701, 711, 721) jeweils Reihenkondensatoren (702, 712, 722) zur Blindleistungskompensation enthalten.

## Claims

1. Device for non-contact inductive transmission of energy to at least one electrical consumer (205) operated with constant voltage, having an electrical primary conductor loop (100), which conducts an impressed alternating current, a secondary winding system (200), which is assigned to the consumer (205) and coupled inductively to the primary conductor loop (100), having secondary windings (201, 202, 301, 302) and a circuit arrangement which is constructed exclusively from passive components (203, 204 or 303, 304) for feeding the consumer with an essentially constant voltage which is independent of its load state, the device having means for tracking the consumer which determine the lateral positional deviation of the secondary winding system from the primary conductor loop, **characterised in that** the secondary windings (201, 202, 301, 302) are fitted as means for determining the lateral positional deviation.

2. Device according to claim 1, **characterised in that** the spatial winding axes of the secondary windings (201, 202) deviate in such a manner from the spatial conductor spacing of the primary conductor loop (100) that the difference in the electrical voltages (U22, U21) at the secondary windings (201, 202) delivers a signal (U2P) which is suitable for determining the lateral positional deviation of the secondary winding system from the primary conductor loop (100).

3. Device according to claim 1 or 2, **characterised in that** the secondary winding system comprises in total four individual windings (630a, 630b, 631 a, 631b) which are independent of each other, two windings (630a, 631a) being disposed on the outer members and two windings (630b, 631 b) on a common central member of a ferrite core (632), and all the windings having a magnetic coupling to the primary conductor loop (633) and being connected to each other electrically in series connection.

4. Device according to one of the claims 1 to 3, **characterised in that** it has a primary conductor arrangement (654) situated essentially in a plane (X, Y) and a secondary winding system (801) which are both fitted and/or disposed such that, with any displacement of the secondary winding system (801) in the X or Y direction and/or with any rotation of the secondary winding system by an angle PHI relative to the primary conductor arrangement (654), at least one secondary winding is coupled inductively to the primary conductor arrangement (654) and hence the secondary winding system (801) provides electrical power with any positioning relative to the primary conductor arrangement (654).

5. Device according to claim 4, **characterised in that** a multiplicity of primary conductors (654) is disposed next to each other at a spacing transversely relative to their extension in one plane and thereby two adjacent primary conductors respectively conduct an alternating current of a different current direction so that, transversely relative to the extension, a spatial magnetic alternating field (653) with a successively different field direction is formed, and **in that** the spatial winding axes of the secondary windings (650a, 650b or 651a, 651b) are disposed at half the spacing of the spatial conductor spacing of the primary conductors, the secondary windings forming two winding groups which feed a common consumer (656) in series connection to respectively a condenser (652, 653) and respectively a rectifier (654, 655).

6. Device according to claim 4, **characterised in that** the secondary winding system (801) comprises three individual coils (802, 803, 804) which are situated one above the other, one of the coils (803) being a round or rectangular coil with a width (A) which corresponds to the spacing (A) of the primary conductor arrangement, a second coil (803) which has the form of an 8 having a width which corresponds to half the spacing of the primary conductor arrangement (654), and a third coil (804) which likewise has the form of an 8 and corresponds to the coil (803), being rotated relative to the coil (803) spatially by 90° and the three coils (802, 803, 804) being disposed one above the other in such a manner that at least one of the three coils is inductively coupled to the primary conductor arrangement (654) with any displacement in the X or Y direction and/or however with any rotation by an angle PHI and hence the secondary winding system (801) provides electrical power with any positioning relative to the primary conductor arrangement (654).

7. Device according to one of the claims 1 to 6, **characterised in that** a plurality of secondary series connection arrangements respectively feeds a common consumer via a rectifier assigned to them in series connection.

8. Device according to one of the claims 1 to 7, **characterised in that** the primary conductor loop is subdivided into block sections and contains switches (703, 713, 723) which can switch individual segments (701, 711, 721) without current by bridging the feed points, the individual segments (701, 711, 721) respectively containing series condensers (702, 712, 722) for wattless power compensation.

## Revendications

1. Dispositif pour la transmission sans contact et par induction d'énergie à au moins un consommateur électrique (205) fonctionnant sous une tension constante, comprenant une boucle de conducteurs électriques primaire (100) conduisant un courant alternatif qui lui est appliqué, un système d'enroulement secondaire (200) associé au consommateur (205), couplé par induction avec la boucle de conducteurs primaire (100), comprenant des enroulements secondaires (201, 202, 301, 302) et un circuit constitué exclusivement de composants passifs (203, 204 respectivement 303, 304) destiné à alimenter le consommateur avec une tension essentiellement constante, indépendante de son état de charge, le dispositif présentant des moyens pour le guidage du consommateur qui déterminent l'écart de position latéral entre le système d'enroulement secondaire et la boucle de conducteurs primaire, **caractérisé par le fait que** les enroulements secondaires (201, 202, 301, 302) sont configurés comme des moyens destinés à déterminer l'écart de position latéral.

2. Dispositif selon la revendication 1, **caractérisé par le fait que** les axes d'enroulement spatiaux des enroulements secondaires (201, 202) s'écartent de la distance spatiale entre conducteurs de la boucle de conducteurs primaire (100) de telle manière que la différence des tensions électriques (U22, U21) aux enroulements secondaires (201, 202) fournisse un signal (U2P) convenant pour la détermination de l'écart de position latéral entre le système d'enroulement secondaire et la boucle de conducteurs primaire (100).

3. Dispositif selon la revendication 1 ou 2, **caractérisé par le fait que** le système d'enroulement secondaire est composé au total de quatre enroulements individuels (630a, 630b, 631a, 631 b) indépendants les uns des autres, sachant que deux enroulements (630a, 631a) sont disposés sur les branches extérieures et deux enroulements (630b, 631b) sur une branche centrale commune d'un noyau en ferrite (632) et que tous les enroulements présentent un couplage magnétique avec la boucle de conducteurs primaire (633) et sont connectés électriquement en série les uns avec les autres.

4. Dispositif selon l'une des revendications 1 à 3, **caractérisé par le fait qu'**il présente une disposition de conducteurs primaire (654) située essentiellement dans un plan (X, Y) et un système d'enroulement secondaire (801) qui tous deux sont configurés et/ou disposés de telle manière qu'en cas de déplacement quelconque du système d'enroulement secondaire (801) en direction X ou Y et/ou en cas de rotation quelconque du système d'enroulement secondaire d'un angle PHI par rapport à la disposition de conducteurs primaire (654), au moins un enroulement secondaire soit couplé par induction avec la disposition de conducteurs primaire (654) et que, par conséquent, le système d'enroulement secondaire (801) fournisse de la puissance électrique quelle que soit sa position par rapport à la disposition de conducteurs primaire (654).

5. Dispositif selon la revendication 4, **caractérisé par le fait qu'**une pluralité de conducteurs primaires (654) sont juxtaposés à distance dans un plan perpendiculairement à leur extension, chaque fois deux conducteurs primaires voisins conduisant ce faisant un courant alternatif de sens de courant différent, de sorte qu'il se forme perpendiculairement à l'extension un champ magnétique alternatif (653) de sens de champ successivement différent, et que les axes d'enroulement spatiaux des enroulements secondaires (650a, 650b respectivement 651a, 651b) sont disposés à la demi-distance de la distance spatiale entre conducteurs des conducteurs primaires, sachant que les enroulements secondaires forment deux groupes d'enroulements qui alimentent un consommateur commun (656) en série chaque fois avec un condensateur (652, 653) et chaque fois un redresseur (654, 655).

6. Dispositif selon la revendication 4, **caractérisé par le fait que** le système d'enroulement secondaire (801) se compose de trois bobines individuelles (802, 803, 804) superposées, sachant qu'une des bobines 803 est une bobine ronde ou rectangulaire de largeur (A) qui correspond à la distance (A) de la disposition de conducteurs primaire, qu'une deuxième bobine (803) qui présente la forme d'un 8 a une largeur qui correspond à la demi-distance de la disposition de conducteurs primaire (654) et qu'une troisième bobine (804) qui présente également la forme d'un 8 et correspond à la bobine (803) est tournée spatialement de 90° par rapport à la bobine (803), et que les trois bobines (802, 803, 804) sont disposées l'une au-dessus de l'autre de telle manière qu'au moins une des trois bobines soit couplée par induction avec la disposition de conducteurs primaire (654) en cas de déplacement quelconque en direction X ou Y et/ou en cas de rotation quelconque d'un angle PHI et que, par conséquent, le système d'enroulement secondaire (801) fournisse de la puissance électrique quelle que soit sa position par rapport à la disposition de conducteurs primaire (654).

7. Dispositif selon l'une des revendications 1 à 6, **caractérisé par le fait que** plusieurs dispositions en série secondaires alimentent un consommateur commun chaque fois par un redresseur qui leur est associé en série.

8. Dispositif selon l'une des revendications 1 à 7, **caractérisé par le fait que** la boucle de conducteurs primaire est divisée en sections de bloc et contient des commutateurs (703, 713, 723) qui peuvent mettre les différents segments (701, 711, 721) hors tension en court-circuitant les points d'alimentation, sachant que les différents segments (701, 711, 721) contiennent chacun des condensateurs en série (702, 712, 722) pour la compensation de puissance réactive.
